**Europäisches Patentamt**

**European Patent Office**

**Office européen des brevets**

(11) Veröffentlichungsnummer: **0 073 273**
**A1**

## EUROPÄISCHE PATENTANMELDUNG

(21) Anmeldenummer: **81108671.9**

(22) Anmeldetag: **22.10.81**

(51) Int. Cl.³: **F 24 F 13/12**, F 16 L 9/22, E 06 B 7/02

(30) Priorität: **28.08.81 DE 3134163**

(43) Veröffentlichungstag der Anmeldung: **09.03.83 Patentblatt 83/10**

(84) Benannte Vertragsstaaten: **AT BE CH FR LI NL**

(71) Anmelder: **Gretsch-Unitas GmbH Baubeschlagfabrik, Johann-Maus-Strasse 3, D-7257 Ditzingen (DE)**

(72) Erfinder: **Maus, Julius, Gaussstrasse 111, D-7000 Stuttgart (DE)**

(74) Vertreter: **Schmid, Berthold et al, Patentanwälte Dipl.-Ing. B. Schmid Dr. Ing. G. Birn Faibenhennenstrasse 17, D-7000 Stuttgart 1 (DE)**

(54) **Schieberlüftung mit einem kastenförmigen Lüftungsgehäuse.**

(57) Das Lüftungsgehäuse (1) besteht aus zumindest zwei gegenüberliegenden Gehäusewänden, beispielweise aus einer oberen Wand (2) und einer unteren Wand (3), die aus jeweils zwei miteinander verbundenen Teilwänden (13, 14, 24, 26) aufgebaut und mittels eines schienen- oder leistenartigen Verbindungselements (15, 17, 22) zusammengehalten sind. Die Verbindung erfolgt vorzugsweise in der Art einer formschlüssigen Steckverbindung. Auch die Verbindung der oberen und der unteren Wand (2 bzw. 3) mit der Rückwand (4) erfolgt über Kunststoff-Verbindungselemente (23) die einen winkelförmigen Querschnitt aufweisen. Wenn eine Gehäuse-Zwischenwand (35) vorgesehen ist, werden im Querschnitt T-förmige Verbindungselemente (22) verwendet. Ein mehrteiliges Verbindungselement (43) gestattet die Bildung von Luftschlitzen (39). Verbindungselemente (15, 17, 22, 23) mit vorzugsweise die Länge des Profils durchsetzenden Bohrungen (29) ermöglichen die steckbare Anbringung einer Gehäuse-Endplatte.

0073273

BEZEICHNUNG GEÄNDERT
siehe Titelseite

Firma

Gretsch-Unitas GmbH

Baubeschlagfabrik


7257   Ditzingen



Schieberlüftung



Die Erfindung bezieht sich auf eine Schieberlüftung mit einem
kastenförmige Lüftungsgehäuse. Solche Schieberlüftungen gibt es
in den verschiedensten Ausführungen, und aufgrund der Verwendung stranggepreßter Profile sowie eines sinnvoll konstruierten
Antriebsmechanismus kann man sie praktisch in jeder gewünschten
Länge leicht herstellen. Eine Anpassung der Breite oder Höhe
ist jedoch bislang nicht möglich. Nachdem die Schieberlüftungen
dieser Art immer mehr Verbreitung finden, steigen zwangsläufig
auch die Anforderungen an ihre Anpassungsmöglichkeit, und

infolgedessen besteht die Aufgabe der Erfindung darin, eine Schieberlüftung mit einem kastenförmigen Lüftungsgehäuse so zu verbessern, daß man eine Anpassung ihres Gehäuses zumindest noch in einer weiteren Dimension vornehmen kann.

Zur Lösung dieser Aufgabe wird erfindungsgemäß vorgeschlagen, daß die Schieberlüftung mit einem kastenförmigen Lüftungsgehäuse gemäß dem kennzeichnenden Teil des Anspruchs 1 ausgebildet ist. Durch die Ausbildung zweier einander gegenüberliegender, insbesondere paralleler Gehäusewände als zweiteilige Gehäusewände läßt sich das Lüftungsgehäuse dadurch den Erfordernissen anpassen, daß man auf jeder Seite eine dieser beiden Gehäuseteilwände durch eine breitere oder schmälere ersetzt. Zumindest eine dieser Teilwände kann die Gestalt einer flachen Leiste, d.h. die technisch einfachste Form aufweisen. Die Länge dieser Leiste entspricht dann der Schieberlüftungslänge, während die Breite durch einfaches Abschneiden der Leiste in Längsrichtung auf jedes beliebige kleinere Maß abgeändert werden kann. Statt dessen ist es aber auch möglich, für dieses Bauteil herstellerseits verschiedene Breitenabmessungen anzubieten, die in vorgegebenen Beträgen abgestuft sein können, um so beispielsweise die Breite des Schieberlüftungsgehäuses in Stufen variieren zu können, ohne daß noch irgend eine Nacharbeit notwendig ist. Theoretisch ist es natürlich auch möglich, die Breite beider Teilwände zu variieren, um dadurch eine besonders große Variationsbreite des Lüftungsgehäuses zu erzielen

unter Beibehaltung eines vernünftigen Breitenverhältnisses der beiden Teilwände.

Eine Weiterbildung der Erfindung sieht vor, daß die beiden Teilwände mittels eines schienen- oder leistenartigen Verbindungselements zusammengehalten sind. Auf diese Weise kann man ihre Längsränder und darüber hinaus die gesamten Verbindungsstellen relativ einfach gestalten. Außerdem ermöglicht das eine Verbindung ohne Schrauben, Niete od. dgl. Im Bedarfsfalle kann noch ein zusätzliches Klebe- oder Klebe-Dichtungsmittel verwendet werden.

Eine bevorzugte Ausführungsform der Erfindung kennzeichnet sich dadurch, daß das Verbindungselement zwei nach entgegengesetzten Richtungen offene, federelastisch aufweitbare, schlitzförmige Aufnahmen besitzt, in die je ein Längsrand der beiden in Verlängerung voneinander stehenden Teilwände eingreift. Durch entsprechende Formgebung und Dimensionierung der schlitzförmigen Aufnahmen kann man eine zumindest weitgehend luftdichte Verbindung erreichen, so daß keine zusätzliche Abdichtung erforderlich ist.

Eine andere Variante der Erfindung besteht darin, daß die Aufnahmen des Verbindungselements zur Bildung von leistenförmigen Verrastelementen profiliert und die Längsränder der eingesteckten Teilwände mit einer Gegenprofilierung versehen sind. Eine

besonders rüttelfeste Verbindung erhält man bei Verwendung
sägezahnartiger Verrastelemente in der Aufnahme des Verbindungselements und am eingesteckten Rand der betreffenden Teilwand.

Eine weitere Ausgestaltung der Erfindung sieht vor, daß zumindest eine der Teilwände durch eine Leiste einer weitere Leisten
aufweisenden Profilschiene gebildet ist. Mit Hilfe der letzteren kann man beispielsweise einen Teil des Lüftungskanals bilden und/oder im Falle einer schall- und/oder wärmegedämmten
Schieberlüftung das Dämmaterial halten und abstützen. Die Teilwände bzw. Profilschienen sind in zweckmäßiger Weise aus Aluminium od. dgl. Leichtmetall und die Verbindungselemente aus
Kunststoff gefertigt. Durch letztere erhält man in vorteilhafter Weise auch eine thermische Isolierung der Gehäuseaußenseite
zur Gehäuseinnenseite.

Bei einer Schieberlüftung mit einem aus einer Rückwand, einer
oberen Wand, einer unteren Wand sowie einem den Lüftungsschieber aufweisenden Deckel und zwei stirnseitigen Endplatten bestehenden Gehäuse wird in Weiterbildung der Erfindung vorgeschlagen, daß die Rückwand mit der oberen Wand einerseits und
der unteren Wand andererseits über je ein Eck-Verbindungselement zusammengehalten sind. Dessen Aufnahmen stehen infolgedessen im Winkel, vorzugsweise im rechten Winkel zueinander. Hin-

sichtlich ihrer Form können sie in gleicher Weise geformt sein wie bei einem flachen Verbindungselement für zwei in Verlängerung voneinander stehende Teilwände.

Gemäß einer anderen bevorzugten Ausführungsform der Erfindung wird vorgeschlagen, daß das Verbindungselement eine dritte schlitzförmige Aufnahme aufweist, die sich senkrecht zu den beiden anderen erstreckt, wobei das Verbindungselement insbesondere einen etwa T-förmigen Querschnitt aufweist. Dieses T-förmige Verbindungselement ermöglicht das wahlweise Einziehen einer Zwischenwand oder das Anhängen eines weiteren Gehäuseteils beispielsweise hinter der Gehäuserückwand. Hierdurch kann man beispielsweise das Dämmverhalten, insbesondere das Schalldämmverhalten, verbessern. Außerdem ermöglicht dieses T-förmige Verbindungselement bei zusätzlicher Verwendung den Aufbau der sich in Richtung des T-Querstegs erstreckenden Wand aus drei Teilwänden, wenn zusätzlich zu dem T-förmigen Verbindungselement auch noch ein flaches verwendet wird. Die Zwischenwand erhöht die Stabilität bei tiefem Gehäuse. Im übrigen kann man bei Verwendung eines mehrteiligen Verbindungselements in zweckmäßiger Weise einen mehrteiligen Durchströmschlitz schaffen.

Eine weitere Variante der Erfindung ist dadurch gekennzeichnet, daß die Rückwand aus zwei Teilwänden besteht, die über ein mehrteiliges Verbindungselement zusammengehalten sind, wobei die beiden Teilwände zur Bildung einer Luftkanal- Ein- bzw.

-Austrittsöffnung einen gegenseitigen Abstand aufweisen. Diese Kanalöffnung wird durch die Verbindungselement-Teilstücke unterteilt, die jedoch den Gesamtquerschnitt kaum reduzieren. Das mehrteilige Verbindungselement besteht vorteilhafterweise aus kurzen Abschnitten von einem längeren Verbindungselement. Ihr gegenseitiger Abstand beträgt das Vielfache, beispielsweise das drei- bis achtfache ihrer Länge, gemessen in Längsrichtung der Schieberlüftung.

Eine der Teilwände der Gehäuse-Rückwand ist gemäß einer anderen Ausgestaltung der Erfindung durch eine Leiste einer weitere Leisten aufweisenden Profilschiene gebildet. Auch in diesem Falle können durch die verschiedenen Leisten einerseits ein Teil des Lüftungskanals geformt und andererseits Anlageflächen für Dämmaterial geschaffen werden.

Nachdem in der vorstehend geschilderten Weise zumindest die obere und untere sowie die Rückwand aus Teilwänden zusammengesteckt werden können, ist es besonders vorteilhaft, wenn man auch die stirnseitigen Enden auf diese Weise schließen kann. Aus diesem Grunde sieht eine Weiterbildung der Erfindung vor, daß wenigstens ein Teil der Verbindungselemente an seinen stirnseitigen Enden eine Steckverbindungshälfte für die steckbare Befestigung der zugeordneten Gehäuse-Endplatte aufweist. Damit ist der Zusammenbau des Schieberlüftungsgehäuses ohne Zuhilfenahme von Schrauben u. dgl. möglich und man benötigt daher für die Montage auch keinerlei Werkzeug. Bei den Verbindungselementen handelt es sich zweckmäßigerweise um Strangpreßprofile, bei denen dann die Steckverbindungshälften jeweils durch
die beiden Enden einer durchgehenden Bohrung gebildet werden.
Im übrigen kann man im Bedarfsfalle in diese Bohrungsenden auch
selbstschneidende Schrauben eindrehen. Zusätzlich kann man die
Endplatten auch noch durch Klebstoff sichern, womit auch eine
Abdichtung an dieser Stelle verbunden ist.

Wenn sich der Lüftungsschieber und die mit den zugehörigen
Gehäuse-Lüftungsöffnungen versehene Gehäusewand an einem Gehäusedeckel befinden oder diesen bilden, so ist es in Falle
eines Klappdeckels sehr vorteilhaft, wenn auch dieser ohne Zuhilfenahme von Werkzeugen und Befestigungselementen am übrigen
Gehäuse gehalten wird, weshalb das Schwenklager so ausgebildet
ist, daß man den Deckel einfach einhängt und er dann aufgrund
einer Schließ-Schwenkbewegung an der Klappachse sicher gehalten
ist.

In der Zeichnung sind zwei Ausführungsbeispiele der Erfindung
dargestellt. Es zeigen:

Figur    1    perspektivisch eine abgebrochene Darstellung der ersten Ausführungsform
              mit abgenommener Gehäuse-Endplatte,

Figur    2    in abgebrochener Darstellung einen
              Ausschnitt im Bereich des einen Endes
              des Luft-Durchtrittskanals,

Figur    3    in vergrößertem Maßstab eine Seitenansicht eines Details der Fig. 2,

Figur    4    in etwas vergrößertem Maßstab und am
              unteren Ende abgebrochen eine Seitenansicht einer zweiten Ausführungsform.

Die Schieberlüftung besitzt ein kastenförmiges Gehäuse 1 mit
insbesondere rechteckigem Querschnitt, das sich aus einer oberen Wand 2, einer unteren Wand 3, einer Rückwand 4, einer als
Klappdeckel ausgebildeten vorderen Wand 5 und zwei nicht dargestellten stirnseitigen Endplatten zusammensetzt. Die vordere
Wand ist mit bekannten Lüftungsöffnungen 6 versehen, zwischen
denen sich gleich dimensionierte Stege 7 befinden. Dahinter befindet sich der Lüftungsschieber 8, der gleich große Stege und
Lüftungsöffnungen besitzt und im Sinne des Doppelpfeils 46 verschiebbar ist. Wenn die Lüftungsöffnungen des Lüftungsschiebers
8 und der vorderen Wand 5 deckungsgleich sind, so kann die Luft
durch den Kanal 9 der Schieberlüftung hindurchströmen. Der
Schieberlüftungs-Kanal 9 wird im wesentlichen durch leisten-
oder schienenförmige Dämmelemente 10, 11 und 12 sowie durch
Leisten von Profilschienen gebildet, die nachstehend noch näher beschrieben werden.

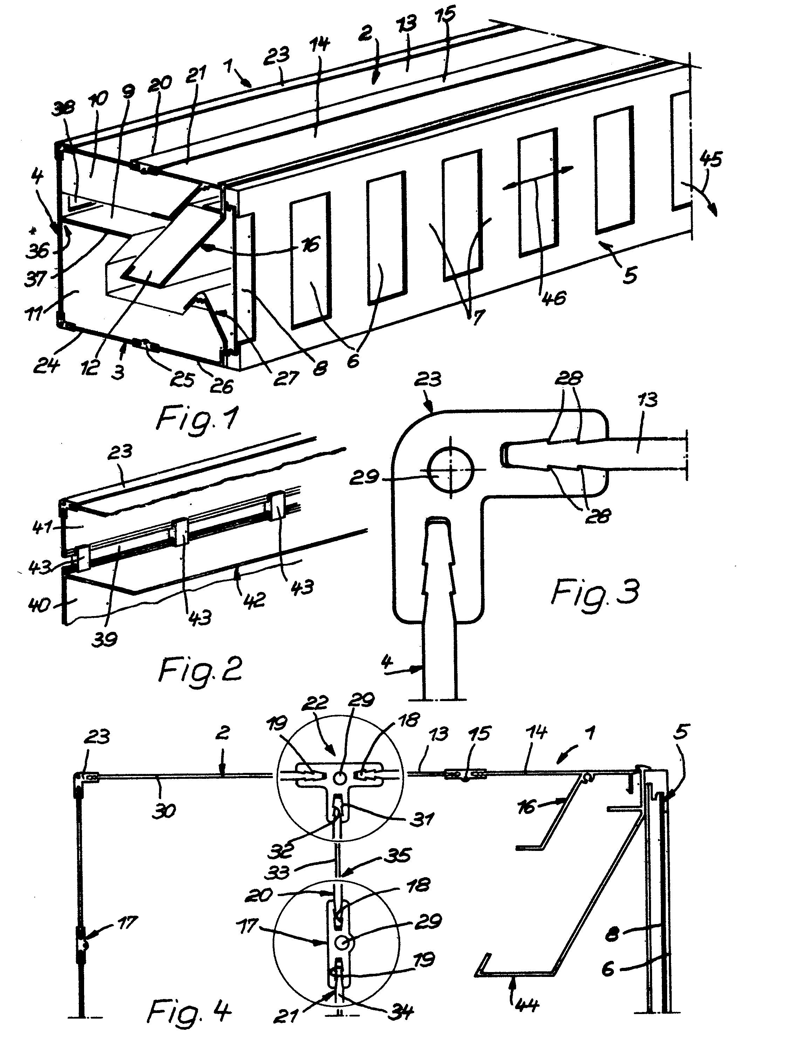

Zumindest die beiden einander gegenüberliegenden Gehäusewände sind erfindungsgemäß aus jeweils zwei miteinander verbundenen Teilwänden aufgebaut. Beim Ausführungsbeispiel gemäß Fig. 1 handelt es sich dabei um die obere Wand 2 und die untere Wand 3. Bei den Varianten gemäß Fign. 2 und 4 besteht auch die Rückwand 4 aus miteinander verbundenen Teilwänden.

In Fig. 1 besteht die obere Wand 2 aus den Teilwänden 13 und 14. Sie sind mittels eines Verbindungselements 15 von leistenartiger Gestalt steckbar zusammengehalten. Dabei besteht die Teilwand 13 aus einem Materialstreifen, insbesondere einem Streifen aus Aluminiumblech. Bei der Teilwand 14 handelt es sich um eine Leiste einer mehrere Leisten umfassenden Profilschiene 16 aus Aluminium od. dgl. Leichtmetall. Demgegenüber ist das Verbindungselement 15 aus Kunststoff hergestellt und seine Form entspricht derjenigen des Verbindungselements 17 der Fig. 4. Es ist im wesentlichen von leistenförmiger Gestalt und besitzt zwei nach entgegengesetzten Richtungen randoffene, federelastisch aufweitbare, schlitzförmige Aufnahmen 18 und 19 zur Aufnahme je eines Längsrandes 20 bzw. 21 (Fig. 1) der in Verlängerung voneinander stehenden Teilwände 13 und 14. Die Ausbildung der Längsränder der verschiedenen Teilwände und auch der Aufnahmen der Verbindungselemente ergibt sich besonders gut aus Fig. 3, die in einem wesentlich größeren Maßstab gehalten ist als die übrigen Figuren. In Fig. 4 ist im Bereich der Verbindungselemente 17 und 22 ein etwas größerer Maßstab verwendet, jedoch ist die Vergrößerung nicht so stark wie in Fig. 3.

In Fig. 3 ist ein winkelförmiges Verbindungselement 23 gezeigt. Es dient zur Verbindung zweier winklig bzw. rechtwinklig zueinander stehender Teilwände oder einer Teilwand mit einer durchgehenden Wand. Beim Ausführungsbeispiel gemäß Fig. 1 werden damit die Teilwand 13 der oberen Wand 12 und die Rückwand 4 miteinander verbunden. Entsprechendes gilt an der hinteren unteren Ecke für die Rückwand 4 und die Teilwand 24. Letztere ist durch ein weiteres Verbindungselement 25 mit einer Teilwand 26 der unteren Wand 3 verbunden, wobei auch diese Teilwand 26 durch eine Leiste einer Profilschiene 27 gebildet wird.

Die Aufnahmen all dieser Verbindungselemente sind profiliert, indem man an den gegenüberliegenden Wandungen leistenförmige Verrastelemente 28 angeformt hat, so daß ein sägezahnartiges Profil entsteht. Eine entsprechende Gegenprofilierung ist an dem eingesteckten Längsrand der Wand bzw. des Wandteils ausgebildet. Die Verbindungselemente (beispielsweise 17, 22, 23) sind zumindest an ihren stirnseitigen Enden mit Bohrungen versehen, die sich in Richtung ihrer Längsachse erstrecken und zweckmäßigerweise Durchgangsbohrungen sind. Sie bilden Steckverbindungshälften 29 und dienen zur Aufnahme einer Gegen-Steckverbindungshälfte, beispielsweise eines Bolzens, Kerb-

stifts od. dgl., die an der zugeordneten Gehäuse-Endplatte angeformt, angebracht oder hindurchgesteckt ist oder zum Eindrehen entsprechend dicker selbstschneidender Schrauben.

Beim Ausführungsbeispiel gemäß Fig. 4 ist die obere Wand 2 aus drei Teilwänden aufgebaut, wobei die dritte Teilwand mit 30 bezeichnet ist. Zwischen letzterer und der Teilwand 13 befindet sich das im Querschnitt T-förmige Verbindungselement 22, an dessen T-Längssteg 31 eine dritte Aufnahme 32 ausgeformt ist. In dieser steckt der Längsrand einer Teilwand 33, welche das Gehäuseinnere in zwei Teile unterteilt und mit der Teilwand 34 sowie dem Verbindungselement 17 zusammen eine innen gelegene Zwischenwand 35 bildet. Letztere bewirkt eine Versteifung und besitzt, soweit erforderlich, mindestens einen Luftdurchtrittsschlitz.

Beim Ausführungsbeispiel gemäß Fig. 1 ist die Rückwand 4 durch eine Leiste einer Profilschiene 36 mit T-förmigem Querschnitt gebildet. Die innen gelegene Profilschienenleiste 37 bildet zugleich einen Teil der einen Kanalwandung des mehrfach abgewinkelten Luftdurchtrittskanals 9 und eine Anlagefläche für das in dieser Figur obere Ende des Dämmelements 11, welches vorzugsweise einen etwa C- und U-förmigen Querschnitt aufweist. Die beiden anderen Dämmelemente 10 und 12 sind plattenförmig und ihr Querschnitt ergibt sich aus Fig. 1.

Während in Fig. 1 der Durchströmschlitz für die Luft durch wenigstens eine Ausstanzung der Gehäuse-Rückwand 4 gebildet ist, entsteht ein dementsprechender Durchströmschlitz 39 beim Ausführungsbeispiel der Fig. 2 durch die Anordnung zweier Teilwände 40 und 41 in vorgegebenem Abstand. Die Teilwand 41 besteht dabei aus einem ebenen Blech, während die Teilwand 40 durch eine Leiste eines mehrere Leisten umfassenden Profils 42 gebildet wird. Anstelle eines sich über die gesamte Länge der Schieberlüftung erstreckenden Verbindungselements findet dort ein aus mehreren Teilstücken bestehendes mehrteiliges Verbindungselement 43 Verwendung, welches den Durchströmschlitz 39 in mehrere Schlitzteile unterteilt.

Weil das von einer Profilschiene 44 gehaltene, im Querschnitt parallelogrammförmige Dämmelement 12 fest mit dem Klappdeckel 5 verbunden ist, wird das Innere der Schieberlüftung zu Reinigungs- und Inspektionszwecken vollständig frei, wenn man den Klappdeckel im Sinne des Pfeils 45 aufklappt. Im übrigen ist dieser Klappdeckel mit Hilfe bekannter Verschlußelemente in seiner Schließlage gehalten, die im einzelnen nicht dargestellt sind.

14 306

A n s p r ü c h e

1.   Schieberlüftung mit einem kastenförmigen Lüftungsgehäuse, dadurch gekennzeichnet, daß zumindest zwei Gehäusewände (2, 3, 4) aus jeweils wenigstens zwei miteinander verbundenen Teilwänden (13, 14; 24, 26) bestehen, von denen zwei einander gegenüber liegen, wobei die Teilung in Verschieberichtung des Lüftungsschiebers (8) bzw. Gehäuselängsrichtung verläuft.

2.   Schieberlüftung nach Anspruch 1, dadurch gekennzeichnet, daß die beiden Teilwände (13, 14; 24, 26) mittels eines schienen- oder leistenartigen Verbindungselements (15, 17, 22, 23, 25, 43) zusammengehalten sind.

3.   Schieberlüftung nach Anspruch 2, dadurch gekennzeichnet, daß das Verbindungselement (z.B. 15, 17) zwei nach entgegengesetzten Richtungen offene, federelastisch aufweitbare, schlitzförmige Aufnahmen (18, 19) besitzt, in die je ein Längsrand (20, 21) der beiden in Verlängerung voneinander stehenden Teilwände (33, 34) eingreift.

4. Schieberlüftung nach Anspruch 3, dadurch gekennzeichnet, daß die Aufnahmen (18, 19) des Verbindungselements (z.B. 15, 17) zur Bildung von leistenförmigen Verrastelementen (28) profiliert und die Längsränder der eingesteckten Teilwände (z.B. 13, 14) mit einer Gegenprofilierung versehen sind.

5. Schieberlüftung nach wenigstens einem der vorhergehenden Ansprüche, dadurch gekennzeichnet, daß zumindest eine der Teilwände (z.B. 14) durch eine Leiste einer weitere Leisten aufweisenden Profilschiene (16) gebildet ist.

6. Schieberlüftung nach Anspruch 5, dadurch gekennzeichnet, daß die Teilwände (z.B. 13, 14) bzw. Profilschienen aus Aluminium od. dgl. Leichtmetall, und die Verbindungselemente (z.B. 15) aus Kunststoff gefertigt sind.

7. Schieberlüftung mit einem aus einer Rückwand, einer oberen Wand, einer unteren Wand sowie einem den Lüftungsschieber aufweisenden Deckel und zwei stirnseitigen Endplatten bestehenden Gehäuse, dadurch gekennzeichnet, daß die Rückwand (4) mit der oberen Wand (2) einerseits und der unteren Wand (3) andererseits über je ein Eck-Verbindungselement (23) zusammengehalten sind.

8. Schieberlüftung nach wenigstens einem der Ansprüche 3 bis 7, dadurch gekennzeichnet, daß das Verbindungselement (22) eine dritte, schlitzförmige Aufnahme (32) aufweist, die sich senkrecht zu den beiden anderen (18, 19) erstreckt, wobei das Verbindungselement insbesondere einen etwa T-förmigen Querschnitt aufweist.

9.   Schieberlüftung nach Anspruch 7 oder 8, dadurch gekennzeichnet, daß die Rückwand (4) aus zwei Teilwänden (40, 41) besteht, die über ein mehrteiliges Verbindungselement (43) zusammengehalten sind, wobei die beiden Teilwände zur Bildung einer Luftkanal-Ein- bzw.-Austrittsöffnung (39) einen gegenseitigen Abstand aufweisen.

10.   Schieberlüftung nach Anspruch 9, dadurch gekennzeichnet, daß eine der Teilwände (40, 41) der Gehäuse-Rückwand (4) durch eine Leiste einer weitere Leisten aufweisenden Profilschiene (36) gebildet ist.

11.   Schieberlüftung nach wenigstens einem der vorhergehenden Ansprüche, dadurch gekennzeichnet, daß wenigstens ein Teil der Verbindungselemente (z.B. 15) an seinem stirnseitigen Ende eine Steckverbindungshälfte (29) für die steckbare Befestigung der zugeordneten Gehäuse-Endplatte aufweist.

0073273

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 919 682 (SIEGENIA-FRANK KG) <br> * Seite 16, Zeilen 16-23; Figuren 1,3 * | | F 24 F 13/12 <br> F 16 L 9/22 <br> E 06 B 7/02 |
| | --- | | |
| A | FR-B-2 171 601 (BRETECHE) <br><br> * Seite 3, Zeile 21 - Seite 6, Zeile 24; Figuren * | | |
| | --- | | |
| A | DE-A-2 546 113 (FSL FENSTER-SYSTEM LÜFTUNGS GmbH & CO VERTRIEBS KG) <br> * Seite 8, Zeile 14 - Seite 9, Zeile 10; Seite 12, Zeile 1 - Seite 13, Zeile 10; Figuren 1,2,4,7,9-11 * | 1-6,10 | |
| | --- | | RECHERCHIERTE SACHGEBIETE (Int. Cl. 3) |
| A | DE-A-2 610 570 (BERNERTH) <br><br> * Seite 6, Zeile 17 - Seite 9, letzte Zeile; Figuren * | 1,2,4, 7,8,11 | F 24 F <br> F 16 B <br> F 16 L |
| | --- | | A 47 B |
| A | CH-A- 334 541 (KLIRO-LUFTKANALBAU JOHANN MANDS KG) <br> * Seite 3, Zeilen 3-43; Figuren 1-3,6-8 * | 1,2,7, 8 | E 06 B |
| | --- | | |

Der vorliegende Recherchenbericht wurde für alle Patentansprüche erstellt.

| Recherchenort | Abschlußdatum der Recherche | Prüfer |
|---|---|---|
| DEN HAAG | 28-07-1982 | SARRE K.J.K.TH. |

Europäisches
Patentamt

**EUROPÄISCHER RECHERCHENBERICHT**

0073273

Nummer der Anmeldung

EP 81 10 8671

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|-----------|-----------------------------------------------------------------------------------|-------------------|-------------------------------------------|
| A | DE-A-2 802 696 (SIEGENIA-FRANK KG) <br> * Seite 18, Zeilen 16-20; Figur 4 * <br><br> ----- | 9 | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---------------|----------------------------|--------|
| DEN HAAG | 28-07-1982 | SARRE K.J.K.TH. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03.82